# EUROPEAN PATENT APPLICATION

(11) **EP 2 554 760 A1**
(43) Date of publication of application: **06.02.2013**
(21) Application number: 11425216.6
(22) Date of filing: 04.08.2011
(51) Int. Cl.: E04B 7/12, F24J 2/04, H01L 31/048, E04B 7/16

(54) **Cover system for roofs of building structures**

(71) Applicant: Luzi, Gazmend, 20054 Nova Milanese (MI) (IT)
(72) Inventor: Luzi, Gazmend, 20054 Nova Milanese (MI) (IT)
(74) Representative: Spina, Alessandro

(57) **Abstract**

A cover system (1) for roofs comprises a plurality of supporting elements (2) suitable to be restrained between subsequent roof beams (3) of a building structure, one or more photovoltaic panels (4) and one or more insulating elements (5), as well as one or more windows (6), wherein said supporting elements (2) are arranged parallel to each other in a transverse direction (T) of said building structure at a predefined distances from each other and comprise a first sloping side (2a) and a second sloping side (2b) adj acent to each other. The photovoltaic panels (4) are mounted superimposed to said insulating elements (5) on said first sloping sides (2a) and the windows (6) are mounted on said second sloping sides (2b). Thanks to this configuration it is possible to combine the characteristics of energy and lighting efficiency typical of shed skylights with the full integration of a photovoltaic system.

## Description

The present invention relates to a cover system for roofs of building structures and in particular to a cover system that combines and architectonically integrates a photovoltaic system and a natural lighting system.

It is known that photovoltaic systems are installations in which a plurality of photovoltaic panels and the related supporting and/or anchoring structures are superimposed to traditional roof covering elements of a building structure, such as roof tiles and insulating sandwich panels. The photovoltaic panels are generally placed on the roof of a building structure, but there are also applications wherein photovoltaic panels are fixed on the facade.

The installation of photovoltaic systems in a building structure has the main obj ective of allowing the compensation of its annual energy demand.

Since the current standards in the field at a national level, in particular the "Conto Energia", Italian Ministerial Decree of August 6, 2010 and subsequent amendments, increasingly promote the use of photovoltaic systems and provide economic benefits that are proportional to their degree of integration into a building structure, it is an obj ect of the present invention to provide a cover system for roofs of building structures fully integrating a photovoltaic system.

It is also an object of the present invention to provide a cover system allowing to maximize the conversion efficiency of solar radiation into electrical energy during daytime hours.

An idea of solution underlying the present invention is to make a cover system configured as a "shed" skylight integrating a photovoltaic system. In particular, the cover system comprises a plurality of supporting elements suitable to be arranged between subsequent roof beams of a building structure, wherein the supporting elements are triangle shaped and allow to mount on a first sloping side a plurality of covering members comprising a multilayer consisting of at least one photovoltaic panel and at least one insulating element, and a plurality of windows on a second sloping side adj acent to the first sloping side of the triangle shaped elements.

The main advantage offered by the invention is to combine the characteristics of energy and lighting efficiency that characterizes shed skylights with the full integration of a photovoltaic system arranged so as to exploit the surfaces exposed to solar radiation to produce electric energy.

According to an embodiment of the invention, the sloping sides of the supporting elements intended to receive the windows are telescopically expandable and the opposed sloping sides, i.e. those intended to receive the photovoltaic panels, are pivotally connected at the roof beams of the building structure. In this way it is possible to quickly and easily vary the angle of inclination of the photovoltaic panels depending on the position of the sun during daytime hours, thus allowing to maximize the efficiency of conversion of solar energy.

The cover system according to the invention may also advantageously comprise a control system suitable to allow to automatically adjust the inclination of the solar panels.

Further advantages and features of the cover system according to the present invention will be clear to those skilled in the art from the following detailed and nonlimiting description of an embodiment thereof, with reference to the attached drawings in which:
- figure 1 is a perspective partially broken view schematically showing a cover system according to the invention applied to a building structure;
- figure 2 shows a cross-section of the cover system of figure 1 taken along line II-II;
- figure 3 shows a cross-section of the cover system of figure 1 taken along line III-III, and
- figures 4 to 7 show subsequent steps of the assembly of the cover system of figure 1.

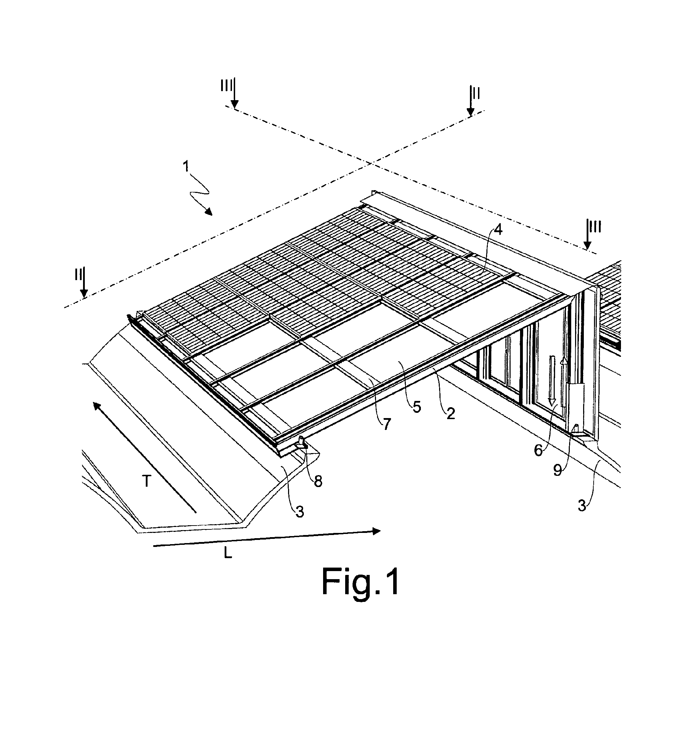

Referring to figures 1 to 3, the roof cover system 1 according to the invention comprises a plurality of supporting elements 2 suitable to be restrained between subsequent roof beams 3 of a building structure (not shown), which are typically arranged parallel to each other in a longitudinal direction L of the building structure and evenly spaced apart, thus defining a plurality of apertures suitable to allow light to enter the building structure. The supporting elements 2 are arranged parallel to each other in a transverse direction T of the building structure and are spaced apart from each other in order to allow to mount a plurality of photovoltaic panels 4 of a standard size.

According to the present invention, the supporting elements 2 are triangle shaped so as to allow to mount the photovoltaic panels 4 according to a tilt angle suitable for the conversion of solar energy. For instance, at latitudes of 45°, corresponding to the location of the city of Milan in Italy, the optimal angle of inclination of a photovoltaic panel is about 30°.

Moreover, according to the present invention the photovoltaic panels 4 mounted on the supporting elements 2 are associated with thermal and/or acoustic insulating elements 5, also mounted on the supporting elements 2, thus forming with them a multilayer suitable to perform the same functions of traditional covering elements and also the function of converting solar energy into electric energy.

On the sloping sides of the supporting elements 2 adjacent to the sloping sides on which the photovoltaic panels 4 and the insulating elements 5 are arranged, windows 6 are mounted, e.g. comprising panels made of polycarbonate.

Therefore, a first side of the cover system 1 according to the invention allows the shielding from solar rays and their conversion into electric energy, while a second side, adj acent to the first side, allows the illumination of the interior space of the building structure.

As it may be seen, the cover system 1 according to the invention is configured as a "shed" skylight, but so structured to fully integrate a photovoltaic system. The full integration of the photovoltaic system meets the requirements of the present standards in the field of energy efficiency, whereby it may be proposed as an integrated system that may benefit from the incentives provided by the "Conto Energia".

Similarly to shed skylights, that are very common in industrial buildings, the cover system according to the invention may be oriented so that the sloping side on which the windows 6 are mounted faces northwards, whereas the adj acent sloping side faces southwards. This avoids the direct illumination of the interior of the building and the consequent effects of glare and overheating. The south-facing side is therefore the ideal platform for the installation of photovoltaic panels, which, according to the present invention, are fully integrated into the cover system.

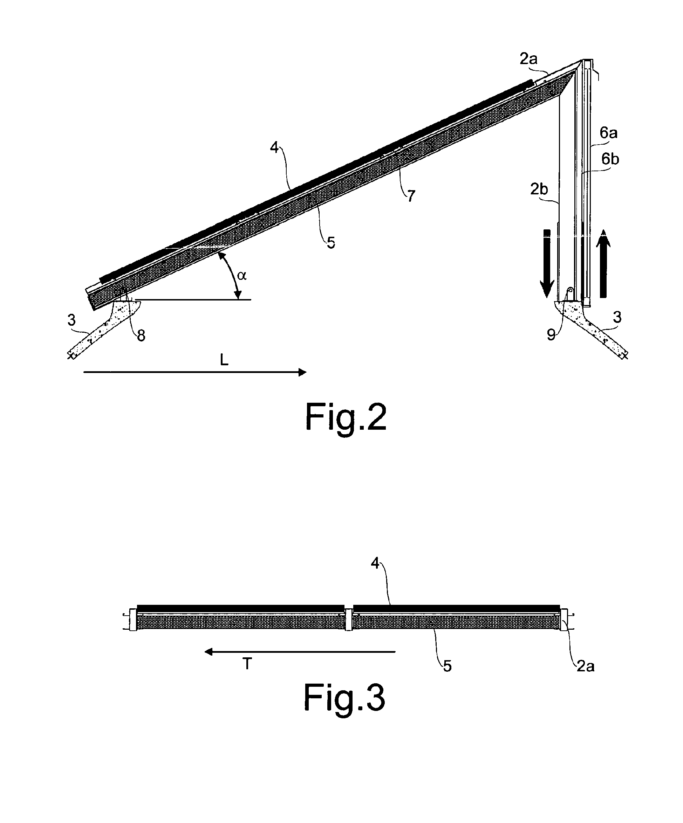

Referring now particularly to figures 2 and 3, the first and second sloping sides of each supporting element 2 are indicated with reference numbers 2a, 2b, respectively. The insulating elements 5 are mounted on the first sloping side 2a and the photovoltaic panels 4 are mounted above the insulating elements 5 so that they face the exterior of the building structure in an assembled configuration of the cover system 1, thus accomplishing a covering function similar to the covering function of the tiles.

On the second sloping side 2b the windows 6 are mounted, which in the illustrated embodiment comprise panels made of a transparent material such as polycarbonate.

The first and second sloping sides 2a, 2b of the supporting elements 2 may be made of profiled bars, e.g. made of aluminum, whose cross-sections may be advantageously shaped so as to form longitudinal guides suitable to allow to slidingly insert the photovoltaic panels 4, the insulating elements 5 and the windows 6.

Depending on the length of the first sloping sides 2a it is possible to mount one or more insulating elements 5 and one or more photovoltaic panels 4. In the embodiment shown in figures 1 to 3, for example, each pair of supporting elements 2 houses three photovoltaic panels 4 below which a single insulating layer 5 is arranged.

In correspondence to the zones at which the photovoltaic panels 4 are joined to each other, the cover system 1 may advantageously comprise drain channels 7 suitable to collect rainwater in order to prevent it from reaching the insulating elements 5. The drain channels 7 are transversely restrained to the supporting elements 2.

Along the first sloping sides 2a of the supporting elements 2 rainwater drain channels are provided, which may be advantageously directly formed in the profiled bars in correspondence to the guides allowing to receive the photovoltaic panels 4.

According to a preferred embodiment of the invention, the cover system 1 is configured so as to allow to change of the angle α of inclination of the photovoltaic panels 4 depending on the position of the sun during daytime hours.

To this end, the free ends of the supporting elements 2 are provided with hinges 8, 9 suitable to allow to pivotally mount them on the roof beams 3 of the building structure, and the second sloping sides 2b, i.e. those intended to receive the windows 6, are telescopically expandable.

In an assembled configuration is therefore possible to vary the angle α of inclination of the photovoltaic panels 4 by simply telescopically extending or shortening the second sloping sides 2b of the supporting elements 2.

The angle α of inclination of the photovoltaic panels 4 defined by the first sloping sides 2a of the supporting elements 2 is preferably variable between 10 and 35 degrees.

In order to change the length of the second sloping sides 2b of the supporting elements 2, electric or hydraulic actuators (not shown) may e.g. be provided, which may be arranged parallel to the second sloping sides 2b or embedded therein.

In order to follow the changes in the length of the second sloping sides 2b, the windows 6 are telescopically expandable. In particular, in the illustrated embodiment the windows 6 comprise two superimposed panels 6a, 6b, that are respectively restrained to telescopic elements forming the second sloping sides 2b. When extending or shortening the second sloping sides 2b, the panels 6a, 6b move together with the telescopic elements of the second sloping sides 2b, thus ensuring the continuity of the lighting surfaces.

The adjustment of the angle α of inclination of the photovoltaic panels 4 may be carried out automatically by way of a control system (not shown) at predetermined time intervals or according to parameters, such as e.g. the level of radiation, that may be detected by suitable sensors of the control system.

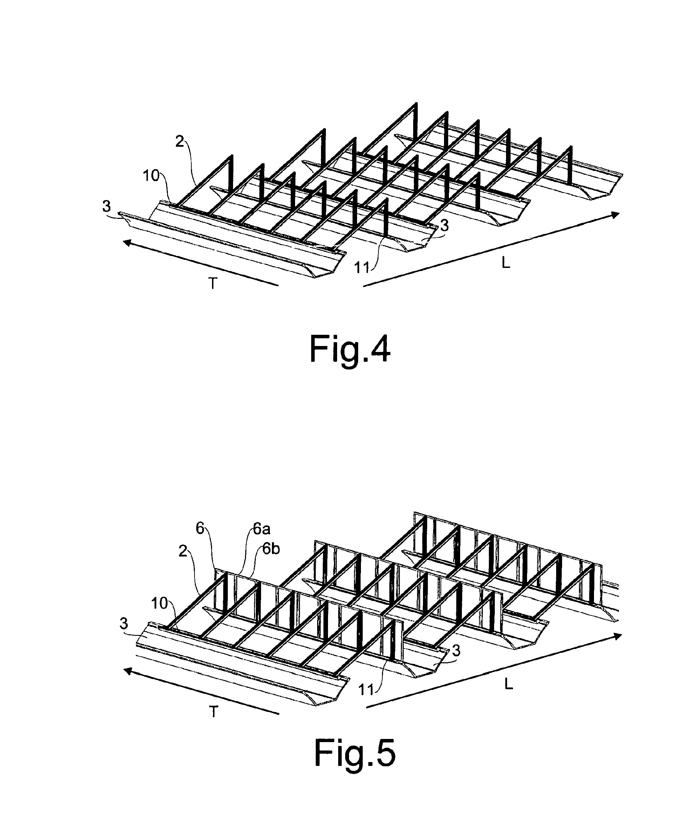

Referring now to figures 4 to 7, the assembly steps of the cover system according to the invention will be described.

As shown in figure 4, between subsequent roof beams 3 of a building structure a plurality of supporting elements 2 are initially mounted. In order to facilitate the installation of the whole cover system 1, the supporting elements 2 may be advantageously pre-assembled on pairs of bars 10, 11 intended to be restrained along the roof beams 3 of the building structure.

Once restrained the supporting elements 2 to the roof beams 3, as shown in figure 5 the windows 6 are mounted. With reference to the illustrated embodiment, this is simply done by inserting the panels 6a, 6b in the guides formed in the bars of the second sloping sides 2b of the supporting elements 2.

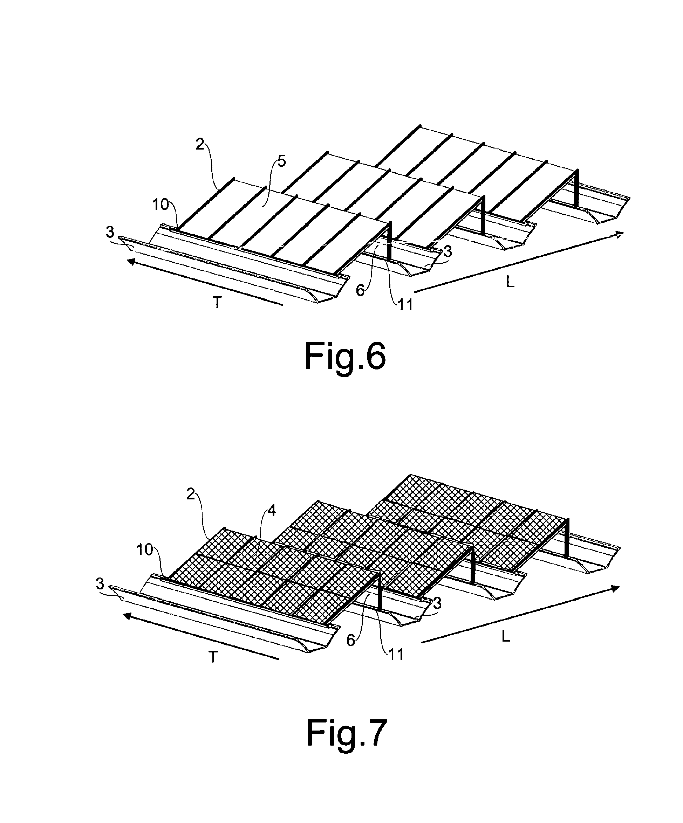

As shown in figure 6, the insulating elements 5 are then mounted by inserting them into the guides formed in the first sloping sides 2a of the supporting elements 2.

Finally, as shown in figure 7, similarly to the insulating elements 5 the photovoltaic panels 4 are mounted by inserting them into the guides formed in the first sloping sides 2a of the supporting elements 2.

In order to complete the cover system, protecting profiles, e.g. comprising zinc coated metal sheets, may possibly be mounted, which are suitable to hide and protect the insertion zones of the solar panels 4, insulating elements 5 and windows 6 from the atmospheric agents.

## Claims

1. A cover system (1) for roofs, said cover system comprising a plurality of supporting elements (2) suitable to be restrained between subsequent roof beams (3) of a building structure, one or more photovoltaic panels (4) and one or more insulating elements (5), as well as one or more windows (6), wherein said supporting elements (2) are arranged parallel to each other in a transverse direction (T) of said building structure at a predefined distances from each other and comprise a first sloping side (2a) and a second sloping side (2b) adjacent to each other, and wherein said photovoltaic panels (4) are mounted superimposed to said insulating elements (5) on said first sloping side (2a) and said windows (6) are mounted on said second sloping side (2b).

2. A cover system (1) according to claim 1, wherein the first and second sloping sides (2a, 2b) of the supporting elements (2) are made up of profiled bars configured so as to allow to slidably insert the photovoltaic panels (4), the insulating elements (5) and the windows (6).

3. A cover system (1) according to claim 1 or 2, further comprising one or more drain channels (7) suitable to drain rainwater, said drain channels (7) being transversally restrained to the supporting elements (2) and arranged where the photovoltaic panels are joined to each other.

4. A cover system (1) according to any one of claims 1 to 3, wherein the supporting elements (2) comprise hinges (8, 9) arranged at the free ends of the respective first and second sloping sides (2a, 2b) and wherein the second sloping sides (2b) of the supporting elements (2) are telescopically expandable.

5. A cover system (1) according to claim 4, wherein an angle (α) of inclination of the photovoltaic panels (4) defined by the first sloping sides (2a) of the supporting elements (2) is variable between 10 and 35 degrees.

6. A cover system (1) according to claim 4 or 5, wherein the windows (6) mounted on the second sloping sides (2b) of the supporting elements (2) are telescopically expandable.

7. A cover system (1) according to claim 6, wherein the windows (6) comprise two or more superimposed panels (6a, 6b) that are respectively restrained to telescopic elements forming the second sloping sides (2b) of the supporting elements (2).

8. A cover system (1) according to any one of claims 4 to 7, further comprising an automatic control system suitable to allow to adjust the angle (α) of inclination of the first sloping sides (2a) of the supporting elements (2).

9. A building structure comprising a cover system (1) according to any one of claims 1 to 8.
